# DEMANDE DE BREVET EUROPEEN

(11) **EP 1 150 532 A1**
(43) Date de publication de la demande: **31.10.2001**
(21) Numéro de dépôt: 01401053.2
(22) Date de dépôt: 25.04.2001
(51) Int. Cl.: H04Q 7/38

(54) **Procédé de connexion à un réseau informatique d'un terminal téléphonique radio "bimode"**

(30) Priorité: 26.04.2000 FR 0005291
(71) Demandeur: SAGEM S.A., 75116 Paris (FR)
(72) Inventeur: Sabatier, Pierre, 95800 Cergy Saint Christophe (FR)
(74) Mandataire: Bloch, Gérard

(57) **Abrégé**

Le terminal téléphonique radio (1) est agencé pour communiquer à travers un réseau cellulaire (30) et, par l'intermédiaire d'une base téléphonique radio (2), à travers un réseau fixe (40). Le terminal (1) se connecte au réseau informatique (50) et communique à travers lui, par l'intermédiaire d'un premier canal de communication (31) du réseau cellulaire (30), puis, au cours de sa communication à travers le réseau informatique (50), pénètre dans la zone de couverture de la base (2). La base (2) se connecte alors au réseau informatique (50) par l'intermédiaire d'un second canal de communication (41) du réseau fixe (40), le terminal (1) commute du premier canal (31) sur le second canal (41) pour la connexion au réseau informatique (50) et, après commutation, poursuit la communication à travers le réseau informatique (50) par l'intermédiaire du second canal (41) et de la base (2).

## Description

Certains terminaux téléphoniques radios, dits "bimodes", sont capables de communiquer à travers un réseau téléphonique cellulaire, par exemple GSM, et, par l'intermédiaire d'une base radio, par exemple DECT, à travers un réseau téléphonique fixe, ou filaire, tel que le réseau RTC ou RNIS.

De tels terminaux téléphoniques peuvent également être dotés de capacités Internet leur permettant d'émettre et de recevoir des messages à travers l'Internet et/ou de naviguer sur l'Internet.

Pour communiquer à travers l'Internet, un terminal téléphonique doit au préalable s'y connecter, par connexion téléphonique, à travers l'un des deux réseaux, cellulaire et fixe, à un fournisseur d'accès à l'Internet. Le terminal est alors connecté à l'Internet par l'intermédiaire d'un canal de communication de l'un des réseaux, cellulaire et fixe.

Les débits de données, supportés par les réseaux cellulaires, sont bien inférieurs à ceux supportés par les réseaux téléphoniques fixes. Il en résulte qu'il est préférable de communiquer à travers l'Internet en passant par un réseau téléphonique fixe, et non pas cellulaire.

La présente invention propose d'optimiser le débit de données, lors d'une communication d'un terminal téléphonique du type défini ci-dessus à travers l'Internet et plus généralement à travers un réseau informatique de ce type.

A cet effet, l'invention concerne un procédé de connexion, à un réseau informatique, d'un terminal téléphonique radio, pouvant communiquer à travers un réseau cellulaire et, par l'intermédiaire d'une base téléphonique radio, à travers un réseau fixe, dans lequel le terminal se connecte au réseau informatique par l'intermédiaire d'un premier canal de communication du réseau cellulaire, caractérisé par le fait que, dans le cas où le terminal pénètre dans la zone de couverture de la base au cours de sa connexion au réseau informatique par le premier canal, la base se connecte au réseau informatique par l'intermédiaire d'un second canal de communication du réseau fixe et le terminal commute du premier canal sur le second canal pour la connexion au réseau informatique.

Ainsi, au cours d'une même connexion au réseau informatique, le terminal change de canal de connexion pour tirer profit des avantages du réseau fixe.

Avantageusement, le terminal étant en cours de communication à travers le réseau informatique par l'intermédiaire du premier canal, après commutation, il poursuit ladite communication par l'intermédiaire du second canal et de la base.

Avantageusement encore, la base se connecte automatiquement au réseau informatique, sur détection de la présence du terminal dans sa zone de couverture et de la connexion en cours du terminal au réseau informatique.

La commutation s'effectue ainsi de façon automatique, sans l'intervention d'un utilisateur.

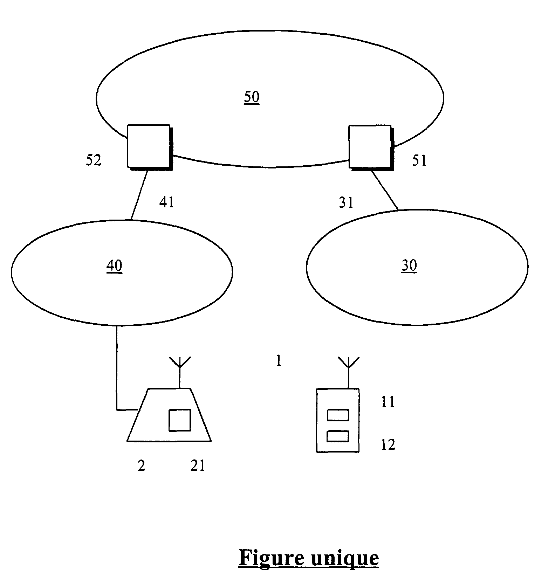

L'invention sera mieux comprise à l'aide de la description suivante d'un mode de réalisation particulier du procédé de connexion d'un terminal téléphonique radio à l'Internet, selon un mode de réalisation particulier de l'invention, en référence à la figure unique annexée qui représente le terminal téléphonique connecté à l'Internet.

Le terminal téléphonique radio 1 est ici un téléphone "bimode", capable de communiquer en mode cellulaire, ici GSM, à travers un réseau téléphonique cellulaire GSM 30, et, par l'intermédiaire d'une base téléphonique radio 2, ici DECT, en mode DECT, à travers un réseau téléphonique fixe, ou filaire, en l'espèce le réseau téléphonique commuté RTC 40, auquel la base 2 est connectée.

Le terminal 1 comprend un navigateur Internet 11, lui permettant de se connecter à l'Internet 50, par connexion téléphonique, à travers le réseau cellulaire 30, à un premier fournisseur 51 d'accès à l'Internet 50, et de communiquer à travers l'Internet 50. Le terminal 1 comprend en outre un bloc 12 de commutation de canal, lui permettant de changer de canal de connexion à l'Internet 50, au cours d'une même connexion à l'Internet 50, comme cela sera explicité plus loin.

La base 2 est connectée au réseau téléphonique 40, par liaison filaire. Elle comprend un bloc 21 de connexion à l'Internet 50, lui permettant de se connecter à l'Internet 50, par connexion téléphonique, à travers le réseau filaire 40, à un second fournisseur 52 d'accès à l'Internet 30. La base 2 est agencée pour se connecter automatiquement à l'Internet 50, sur réception d'un message du terminal 1 indiquant qu'il est connecté à l'Internet 50, comme explicité ci-après.

Le procédé de connexion du terminal 1 à l'Internet 50 va maintenant être explicité.

Dans l'exemple particulier de la description, le terminal 1 est initialement situé dans la zone de couverture du réseau GSM 30, mais en dehors de la zone de couverture de la base DECT 2.

Sous la commande d'un utilisateur, le terminal 1 se connecte à l'Internet 50, par connexion téléphonique, à travers le réseau GSM 30, au fournisseur d'accès 51. Pour cela, le terminal 1 appelle le fournisseur d'accès 51, établit avec lui une communication téléphonique, à travers un premier canal de communication 31, du réseau GSM 30, et exécute un protocole de connexion à l'Internet 50. Lors de la connexion, le terminal 1 obtient une première adresse informatique IP (Internet Protocol - protocole Internet) sur l'Internet 50, que l'on appellera par la suite "IP1".

Puis le terminal 1, connecté à l'Internet 50 par le canal GSM 31, communique, ou navigue, à travers l'Internet 50. Les données de la communication Internet transitent par le canal GSM 31.

Au cours de cette communication à travers l'Internet 50, le terminal 1 se déplace et pénètre dans la zone de couverture de la base 2. Sur réception de signaux de balise, émis par la base 2, le terminal 1 s'apparie à la base 2 et lui signale sa connexion en cours à l'Internet 50, par l'envoi d'un message le spécifiant. La base 2 détecte ainsi la présence du terminal 1 dans sa zone de couverture et le fait qu'il est connecté à l'Internet 50.

Sur détection de la présence du terminal 1 dans sa zone de couverture et de la connexion en cours du terminal 1 à l'Internet 50, la base 2 se connecte automatiquement à l'Internet 50, par connexion téléphonique, à travers le réseau GSM 40, au fournisseur d'accès 52. Pour cela, la base 2 appelle le fournisseur d'accès 52, établit avec lui une communication téléphonique à travers un canal de communication 41 du réseau fixe 40, et exécute un protocole de connexion à l'Internet 50. Au cours de sa connexion à l'Internet 50, la base 2 obtient une seconde adresse IP sur l'Internet 50, que l'on appellera par la suite "IP2".

La base 2 notifie au terminal 1 sa connexion à l'Internet 50, par l'envoi d'un message. Le terminal 1 commute alors du canal GSM 31 sur le canal RTC 41, pour la connexion à l'Internet 50, et interrompt la liaison avec le premier fournisseur d'accès 51.

Après avoir changé de canal de communication, pour la connexion Internet, le terminal 1 reprend et poursuit la communication en cours à travers l'Internet 50, par l'intermédiaire de la base radio 2 et du canal RTC 41, en utilisant l'adresse IP2 et non plus l'adresse IP1. Les données, transmises lors de la communication Internet, transitent par la base DECT 2 et par le canal RTC 41.

On pourrait également envisager que, dans le cas où le terminal 1 sort de la zone de couverture de la base 2, alors qu'il est en cours de communication à travers l'Internet 50 par l'intermédiaire de la base 2, le terminal 1 se connecte directement à l'Internet 50, par l'intermédiaire du premier fournisseur d'accès 51, puis commute de canal de communication pour la connexion à l'Internet 50 et poursuive la communication Internet, après commutation, à travers le canal GSM.

Le terminal pourrait être agencé pour communiquer dans des modes de téléphonie cellulaire et de téléphonie sans fil, autres que les modes GSM et DECT. En outre, la base pourrait être connectée à tout autre type de réseau téléphonique fixe, par exemple au réseau RNIS.

## Revendications

1. Procédé de connexion, à un réseau informatique (50), d'un terminal téléphonique radio (1), pouvant communiquer à travers un réseau cellulaire (30) et, par l'intermédiaire d'une base téléphonique radio (2), à travers un réseau fixe (40), dans lequel le terminal (1) se connecte au réseau informatique (50) par l'intermédiaire d'un premier canal de communication (31) du réseau cellulaire (30), **caractérisé par le fait que**, dans le cas où le terminal (1) pénètre dans la zone de couverture de la base (2) au cours de sa connexion au réseau informatique (50) par le premier canal (41), la base (2) se connecte au réseau informatique (50) par l'intermédiaire d'un second canal de communication (41) du réseau fixe (40) et le terminal (1) commute du premier canal (31) sur le second canal (41) pour la connexion au réseau informatique (50).

2. Procédé selon la revendication 1, dans lequel, le terminal (1) étant en cours de communication à travers le réseau informatique (50) par l'intermédiaire du premier canal (31), après commutation, il poursuit ladite communication par l'intermédiaire du second canal (41) et de la base (2).

3. Procédé selon l'une des revendications 1 et 2, dans lequel la base (2) se connecte automatiquement au réseau informatique (50), sur détection de la présence du terminal (1) dans sa zone de couverture et de la connexion en cours du terminal (1) au réseau informatique (50).

4. Procédé selon la revendication 3, dans lequel, lorsqu'il pénètre dans la zone de couverture de la base (2), le terminal (1) s'apparie à la base (2) et lui signale qu'il est connecté au réseau informatique (50).
